# EUROPÄISCHE PATENTSCHRIFT

(11) **EP 3 273 084 B1**
(45) Veröffentlichungstag und Bekanntmachung des Hinweises auf die Patenterteilung: **30.03.2022**
(21) Anmeldenummer: 17001208.2
(22) Anmeldetag: 14.07.2017
(51) Int. Cl.: F16D 23/02, F16D 23/06

(54) **SYNCHRONRING**
SYNCHRONOUS RING
BAGUE DE SYNCHRONISATION

(30) Priorität: 22.07.2016 DE 102016008986
(43) Veröffentlichungstag der Anmeldung: 24.01.2018
(73) Patentinhaber: Diehl Metall Stiftung & Co. KG, 90552 Röthenbach (DE)
(72) Erfinder: Arbak, Murat, 91207 Lauf an der Pegnitz (DE)
(74) Vertreter: Diehl Patentabteilung

(56) Entgegenhaltungen:
- WO-A1-2010/130366
- DE-A1-102005 050 477
- DE-A1-102008 023 031
- JP-A- H0 942 313
- JP-U- S5 578 834

## Beschreibung

Die Erfindung betrifft einen geschmiedeten Synchronring mit einem Grundkörper, an dem sich radial nach außen erstreckende Indexnocken und Zentrierflächen ausgebildet sind.

Aus den JPS 5578834U und DE 10 2005 050477 A1 ist ein Synchronring aus einer geschmiedeten Messinglegierung bekannt. Aus der DE 10 2008 023031 A1 ist ein Blech-Synchronring bekannt, welcher aus einem Blechmaterial im Stanz- und Ziehverfahren hergestellt wird.

JPS 5578834U offenbart nicht dass die Aussparung komplett durchstossend ausgebildet ist, also die Aussparung sowohl die Sperrzähne tragende Schürze als auch den Indexnocken ausnimmt.

DE 10 2005 050477 A1 offenbart keinen Indexnocken der an einer von in Umfangsrichtung weisende Anschlagfläche beanstandeten Position eine Aussparung aufweist.

DE 10 2008 023031 A1 offenbart kein geschmiedetes Synchronring sondern ein Blechsynchronring.

Ein Synchronring ist Bestandteil einer Synchronisierungseinrichtung eines Getriebes und dient zum Angleichen einer Drehzahldifferenz zwischen einer Welle und einem zu schaltenden Gangrad. Eine Synchronisierungseinrichtung kann neben einem Synchronring weitere Bestandteile, wie eine Schiebemuffe, einen Muffenträger sowie ein Gang- oder Losrad umfassen.

Ein gattungsgemäßer Synchronring ist aus der DE 10 2005 035 941 B3 bekannt.

Gemäß einem bevorzugten Herstellungsverfahren werden Synchronringe aus einer Messinglegierung durch Schmieden und/oder Warmmassivumformen hergestellt.

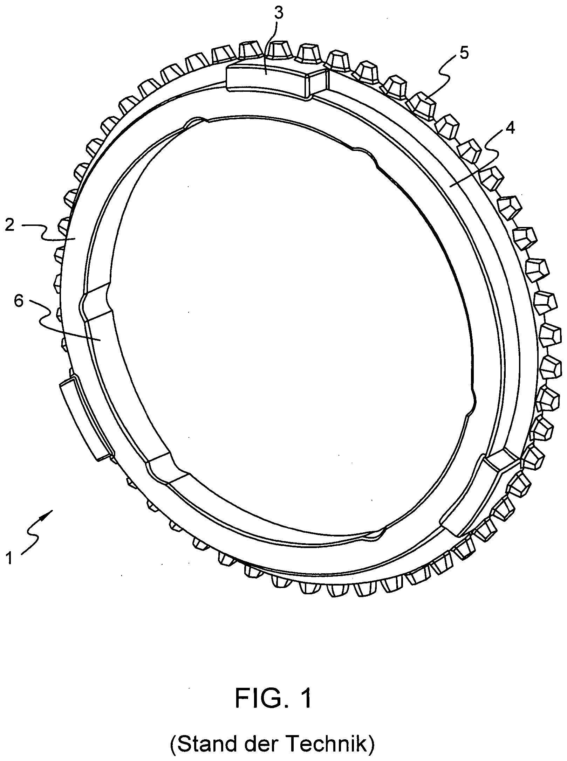

Fig. 1 zeigt einen herkömmlichen Synchronring 1 mit einem Grundkörper 2, an dem sich radial nach außen erstreckende Indexnocken 3 und Zentrierflächen 4 ausgebildet sind. Daneben umfasst der Synchronring 1 sich radial nach außen erstreckende und entlang des Umfangs angeordnete Sperrzähne 5 und eine innere ringförmige Konusfläche 6. In Fig. 1 erkennt man, dass die Indexnocken 3 massiv ausgebildet sind und die Zentrierflächen 4 sich entlang des gesamten Umfangs erstrecken. Ein derartiger, herkömmlicher Synchronring besitzt eine vergleichsweise große Masse.

Der Erfindung liegt daher die Aufgabe zu Grunde, einen Synchronring anzugeben, der eine geringere Masse aufweist.

Zur Lösung dieser Aufgabe ist bei einem geschmiedeten Synchronring der eingangs genannten Art erfindungsgemäß vorgesehen, dass wenigstens ein Indexnocken an einer von einer in Umfangsrichtung weisenden Anschlagfläche beabstandeten Position eine Aussparung aufweist und die Aussparung komplett durchstoßend ausgebildet ist, also die Aussparung sowohl die Sperrzähne tragende Schürze als auch den Indexnocken ausnimmt. Vorteilhafte Ausführungsformen sind in den Ansprüchen 2 bis 15 angegeben. Insbesondere ist es von Vorteil, dass wenigstens eine Zentrierfläche sich lediglich über einen festgelegten Abschnitt in Umfangsrichtung erstreckt und sich daran in Umfangsrichtung anschließende Bereiche einen geringeren Durchmesser als die Zentrierfläche aufweisen.

Durch die Erfindung wurde erkannt, dass die Masse eines Synchronrings durch zwei Maßnahmen beträchtlich verringert werden kann, wobei die Maßnahmen entweder alternativ oder gemeinsam vorgesehen sein können. Im Hinblick auf die Indexnocken wurde erkannt, dass es nicht erforderlich ist, diese massiv auszubilden, da ein Indexnocken im Wesentlichen durch in Umfangsrichtung angreifende Kräfte beaufschlagt wird. Es ist daher ohne Weiteres möglich, einen Indexnocken mit einer Aussparung zu versehen, wodurch sich eine beträchtliche Materialersparnis ergibt.

Im Hinblick auf die Zentrierflächen wurde erkannt, dass es nicht erforderlich ist, diese entlang des gesamten Umfangs bzw. zwischen allen Indexnocken auszubilden. Vielmehr ist es ausreichend, wenn sich eine Zentrierfläche lediglich über einen festgelegten Abschnitt in Umfangsrichtung erstreckt, wobei sich daran in Umfangsrichtung anschließende Bereiche einen geringeren Durchmesser als die Zentrierfläche aufweisen. Auch durch diese Maßnahme kann eine beträchtliche Masse eingespart werden. Der erfindungsgemäße Synchronring weist dieselbe Funktionalität wie ein herkömmlicher Synchronring auf. Lediglich an solchen Stellen, die für eine Funktion nicht benötigt werden oder nicht erforderlich sind, wird Material eingespart.

Vorzugsweise ist bei einem erfindungsgemäßen Synchronring vorgesehen, dass alle Indexnocken an einer von einer in Umfangsrichtung weisenden Anschlagfläche beabstandeten Position eine Aussparung aufweisen und/oder dass alle Zentrierflächen sich lediglich über einen festgelegten Abschnitt in Umfangsrichtung erstrecken und sich daran in Umfangsrichtung anschließende Bereiche einen geringeren Durchmesser als die Zentrierflächen aufweisen. Durch diese Maßnahme weist der erfindungsgemäße Synchronring eine ausgeglichene Massenverteilung auf.

Im Hinblick auf die Aussparung eines Indexnockens wird es erfindungsgemäß bevorzugt, dass diese U-förmig, quaderförmig, als kreisförmige Tasche, als kugelförmige Tasche oder als rechteckige oder trapezförmige Tasche ausgebildet ist. Derartige Geometrien lassen sich vergleichsweise einfach herstellen, ohne dass dazu komplizierte und teure Werkzeuge erforderlich wären. Dementsprechend kann die Erfindung mit einem vergleichsweise geringen Aufwand implementiert werden, da nur geringe Änderungen von Fertigungswerkzeugen erforderlich sind.

Es liegt auch im Rahmen der Erfindung, dass die Aussparung in der Mitte des Indexnockens angeordnet ist. Vorzugsweise ist eine Aussparung eines Indexnockens somit symmetrisch angeordnet. Da aber die Beanspruchung in speziellen Getrieben asymmetrisch sein kann (z. B. wenn der höchste Gang immer nur in eine Drehrichtung geschaltet wird), könnte eine weitere Materialeinsparung durch asymmetrische Gestaltung der Aussparung erreicht werden.

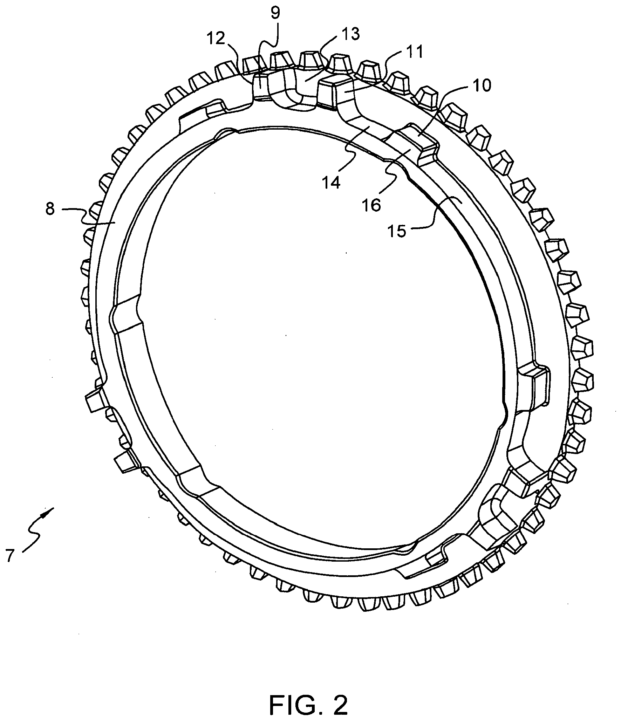

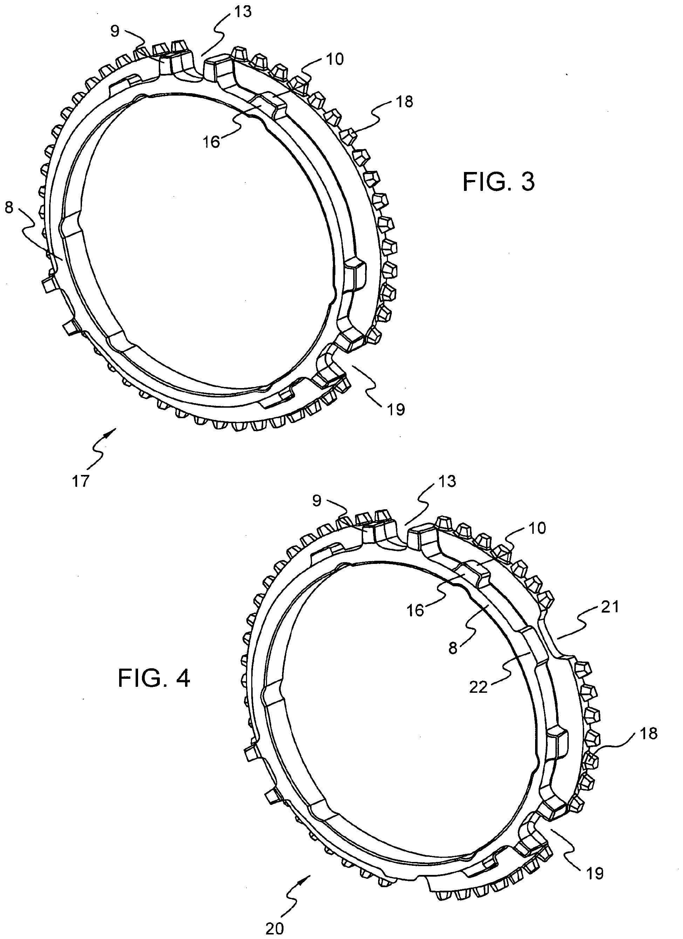

Erfindungsgemäß ist die Aussparung eines Indexnockens, gleich welcher Form oder Anordnung sie sein mag, ist - wie in Fign. 3, 4 und 5 dargestellt - komplett durchstoßend ausgebildet sein, d. h. sowohl die die Sperrzähne 18 tragende Schürze, als auch den Indexnocken 9 ausnehmen. Es ist aber auch möglich, dass die Aussparung nur den Indexnocken 9 ausnimmt und nicht die die Sperrzähne 18 tragende Schürze, wie es in Fig.2, die nicht Teil der Erfindung ist, dargestellt ist.

Im Hinblick auf die Zentrierflächen genügt es, wenn sich eine Zentrierfläche über eine Strecke von 1 mm bis 40 mm (bei einem Synchrönring mit 120 mm Durchmesser) oder über eine Strecke von 1mm bis 15mm (bei einem Synchronring mit 45 mm Durchmesser) in Umfangsrichtung erstreckt. Dies entspricht ungefähr einem Winkel von 1° bis 40° in Umfangsrichtung bezogen auf den Mittelpunkt des Synchronrings. Im Stand der Technik erstreckt sich eine Zentrierfläche demgegenüber beispielsweise über näherungsweise 120°, wenn drei Indexnocken vorgesehen sind. Durch die erfindungsgemäß vorgesehene Reduzierung der Länge einer Zentrierfläche in Umfangsrichtung auf einen Winkelbereich von maximal 40° kann somit eine beträchtliche Materialersparnis erzielt werden, wodurch sowohl die Herstellungskosten als auch die Masse des hergestellten erfindungsgemäßen Synchronrings verringert werden.

Eine besonders bevorzugte Ausgestaltung der Erfindung sieht vor, dass jedem Indexnocken zwei Zentrierflächen zugeordnet sind, die an beiden Seiten des Indexnockens angeordnet sind.

Eine besonders zuverlässige Funktion ist gewährleistet, wenn der erfindungsgemäße Synchronring drei, sechs oder neun Zentrierflächen aufweist. Vorzugsweise weist der erfindungsgemäße Synchronring drei Indexnocken auf.

Vorzugsweise ist eine Zentrierfläche an einem Zentriernocken ausgebildet, d. h. ein Zentriernocken besitzt eine ähnliche Form wie ein Indexnocken und erstreckt sich radial nach außen.

Mit besonderem Vorteil kann es bei einem erfindungsgemäßen Synchronring vorgesehen sein, dass er an seinem Außenumfang sich radial erstreckende äquidistant angeordnete Sperrzähne aufweist, wobei wenigstens ein Abschnitt des Außenumfangs keine Sperrzähne aufweist. Im Rahmen der Erfindung wurde überraschend festgestellt, dass es nicht erforderlich ist, dass Sperrzähne entlang des gesamten Umfangs ausgebildet sind. Vielmehr können ein oder mehrere Abschnitte vorgesehen sein, die keine Sperrzähne aufweisen. Vorzugsweise sind die mehreren Abschnitte, die keine Sperrzähne aufweisen, äquidistant in Umfangsrichtung verteilt angeordnet.

Erfindungsgemäß wird es bevorzugt, dass im Bereich eines keine Sperrzähne aufweisenden Abschnitts des Außenumfangs eine sich radial nach außen erstreckende Materialverdickung ausgebildet ist. Die Materialverdickung bewirkt, dass der keine Sperrzähne aufweisende Abschnitt zumindest näherungsweise dieselbe Steifigkeit wie ein Sperrzähne aufweisender Bereich aufweist. Dementsprechend weisen auch die Abschnitte, an denen sich keine Sperrzähne befinden, zumindest näherungsweise dieselbe Steifigkeit wie ein herkömmlicher Synchronring auf, wodurch eine zuverlässige Funktion gewährleistet ist. Die sich radial nach außen erstreckenden Materialverdickungen sind vorzugsweise auf einer Außenfläche des Grundkörpers, an der auch die Zentriernocken angeordnet sind, ausgebildet.

Eine weitere Materialersparnis kann bei dem erfindungsgemäßen Synchronring dadurch erzielt werden, dass er eine an einer Planfläche des Zentriernockens ausgebildete Abschrägung oder Abrundung oder einen Radius aufweist. Es wurde festgestellt, dass dieser Bereich für eine zuverlässige Funktion nicht unbedingt erforderlich ist, so dass durch den verringerten Querschnitt eine weitere Materialersparnis möglich ist. In diesem Zusammenhang wird es bei dem erfindungsgemäßen Synchronring bevorzugt, dass die Abschrägung einen Winkel zwischen 1° und 70° mit der Planfläche bildet.

Alternativ oder zusätzlich kann es bei dem erfindungsgemäßen Synchronring vorgesehen sein, dass eine Außenkante der Planfläche eine umlaufende Fase oder eine Abrundung oder einen Radius aufweist. Die Fase, die Abrundung bzw. der Radius befindet sich an derjenigen Seite des Synchronrings, die den kleineren Konusdurchmesser aufweist.

Der erfindungsgemäße Synchronring ist vorzugsweise aus einer Messinglegierung geschmiedet. Er kann aber auch aus Stahl geschmiedet sein oder pulvermetallurgisch hergestellt sein.

Die Erfindung wird nachfolgend anhand von Ausführungsbeispielen unter Bezugnahme auf die Zeichnungen näher erläutert. Die Zeichnungen sind schematische Darstellungen und zeigen:
- Fig. 1: eine perspektivische Ansicht eines herkömmlichen Synchronrings,
- Fig. 2: ein Synchronring in einer perspektivischen Ansicht, der nicht Teil der Erfindung ist.
- Fig. 3: ein erstes Ausführungsbeispiel eines erfindungsgemäßen Synchronrings in einer perspektivischen Ansicht,
- Fig. 4: ein zweites Ausführungsbeispiel eines erfindungsgemäßen Synchronrings in einer perspektivischen Ansicht,
- Fig. 5: ein Draufsicht des in Fig. 4 gezeigten Synchronrings,
- Fig. 6: einen Schnitt des in Fig. 5 gezeigten Synchronrings entlang der Linie VI-VI
- Fig. 7: einen Ausschnitt aus Fig. 5 mit einer Fokussierung auf einen Zentriernocken 16 mit Zentrierfläche 10,
- Fig. 7a: eine erste Alternative einer Form eines Zentriernockens 16,
- Fig. 7b: eine zweite Alternative einer Form eines Zentriernockens 16,
- Fig. 7c: eine dritte Alternative einer Form eines Zentriernockens 16,
- Fig. 7d: eine vierte Alternative einer Form eines Zentriernockens 16, und
- Fig. 7e: eine fünfte Alternative einer Form eines Zentriernockens 16.

Der in Fig. 2 gezeigte Synchronring 7 umfasst einen Grundkörper 8, an dem sich radial nach außen erstreckende Indexnocken 9 und Zentrierflächen 10 ausgebildet sind. In Fig. 2 erkennt man, dass der Synchronring 7 insgesamt drei äquidistant über den Umfang verteilte Indexnocken 9 und insgesamt sechs Zentrierflächen 10 aufweist. Jeder Indexnocken 9 weist zwei in Umfangsrichtung weisende Anschlagflächen 11, 12 auf. An einer davon beabstandeten Position, zwischen den beiden Anschlagflächen 11, 12, weist der jeweilige Indexnocken 9 eine näherungsweise U-förmig ausgebildete Aussparung 13 auf. Dahinter steht die Überlegung, dass der Bereich der Aussparung 13 für die Funktion des Indexnockens 9 keine Rolle spielt. Während ein herkömmlicher Indexnocken, beispielsweise der in Fig. 1 gezeigte Indexnocken 3, näherungsweise quaderförmig ausgebildet ist, weist der Indexnocken 9 die U-förmige Aussparung 13 auf, ohne dass dadurch die Funktionalität des Synchronrings 7 beeinflusst wird. Es wurde erkannt, dass es für die Funktion des Indexnockens 9 darauf ankommt, dass dieser die beiden Anschlagflächen 11, 12 aufweist, wohingegen der Bereich der Aussparung 13 nicht benötigt wird, so dass Material an dieser Stelle eingespart werden kann. Da alle drei Indexnocken 9 eine entsprechende Aussparung aufweisen, ist die Materialersparung beträchtlich.

Der Synchronring 7 weist die sechs Zentrierflächen 10 auf, die sich radial nach außen erstrecken und eine Zentrierfläche bilden. Der Durchmesser dieser zylindermantelflächenförmigen Zentrierfläche stimmt mit dem Durchmesser der Zentrierflächen 4 von Fig. 1 überein. Allerdings erstrecken sich die Zentrierflächen 10 lediglich über einen festgelegten Winkelbereich, beispielsweise über 10°. Die sich an die Zentrierflächen 10 in Umfangsrichtung anschließenden Bereiche weisen einen geringeren Durchmesser auf. An die Zentrierfläche 10 schließen sich in diesem Ausführungsbeispiel die Bereiche 14, 15 an.

In Fig. 2 erkennt man, dass die Zentrierflächen 10 radial außen an einem Zentriernocken 16 angeordnet sind. Anders als bei einem herkömmlichen, in Fig. 1 gezeigten Synchronring 1 erstrecken sich somit lediglich die Zentrierflächen 10 bis zu einem "Zentrierdurchmesser", während die benachbarten Bereiche 14, 15 einen kleineren Durchmesser aufweisen. Dementsprechend ergibt sich dadurch eine beträchtliche Materialersparnis, ohne dass die Funktionalität des Synchronrings 7 nachteilig beeinflusst wird. Die insgesamt sechs Zentrierflächen 10 der Zentriernocken 16 bilden Funktionsflächen für die Zentrierung.

Es sind auch abgewandelte Ausführungen denkbar, bei denen entweder lediglich die Indexnocken mit Aussparungen versehen sind oder lediglich die an den Zentriernocken ausgebildeten Zentrierflächen sowie die Bereiche mit verringertem Durchmesser vorhanden sind.

Fig. 3 zeigt einen Synchronring 17 gemäß einem ersten Ausführungsbeispiel, der den Grundkörper 8 und Indexnocken 9 mit einer in der Mitte des Indexnockens 9 angeordneten Aussparung 13 aufweist. Ebenso weist der Synchronring 17 überstimmend mit dem in Fig. 2 gezeigten herkömmlichen Ausführungsbeispiel die Zentriernocken 16 mit den Zentrierflächen 10 auf. Insoweit stimmen die Synchronringe 7 und 17 überein. Zusätzlich weist der Synchronring 17 im Bereich seiner am Außenumfang sich radial erstreckenden, äquidistant angeordneten Sperrzähnen 18 mehrere Lücken bildende Abschnitte 19 auf, die keine Sperrzähne 18 aufweisen. Die am Außenumfang des Synchronrings 17 angeordneten Sperrzähne 18 weisen somit Lücken in Form der Abschnitte 19 auf, in denen keine derartigen Sperrzähne 18 ausgebildet sind. In dem dargestellten Ausführungsbeispiel befindet sich ein als Lücke ausgebildeter Abschnitt 19 jeweils an derjenigen Umfangsposition, an der ein Indexnocken 9 ausgebildet ist. Eine durch im Abschnitt 19 auf Grund der fehlenden Sperrzähne 18 verringerte Steifigkeit wird durch die Indexnocken 9 kompensiert, so dass die Steifigkeit des Synchronrings 17 insgesamt den auftretenden Belastungen genügt. Durch die im Bereich der Abschnitte 19 fehlenden Sperrzähne 18 wird die Masse des Synchronrings 17 weiter verringert. In Fig. 3 ist dargestellt, dass der Synchronring 17 insgesamt drei derartige, als Lücken ausgebildete Abschnitte 19 aufweist, entsprechend der Anzahl der Indexnocken 9.

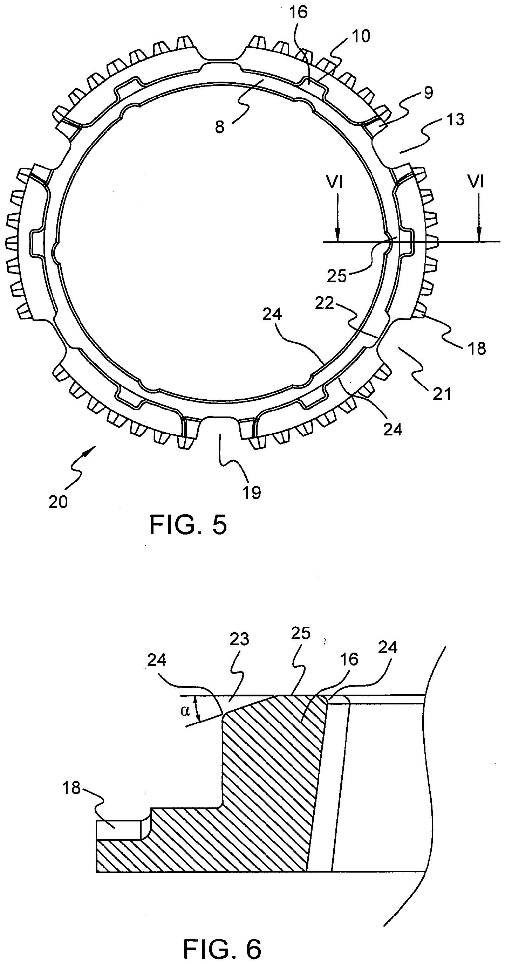

Die Fig. 4 und 5 zeigen ein weiteres Ausführungsbeispiel eines Synchronrings 20, wobei Fig. 4 eine perspektivische Ansicht und Fig. 5 eine Draufsicht ist. Der Synchronring 20 weist sämtliche Merkmale und Bestandteile des Synchronrings 17 auf. Insbesondere weist er die Indexnocken 9 mit den Aussparungen 13, die Zentriernocken 16 mit den Zentrierflächen 10 sowie die als Lücken ausgebildeten Abschnitte 19 der in Umfangsrichtung angeordneten Sperrzähne 18 auf. Neben den drei als Lücken ausgebildeten Abschnitten 19, die im Bereich der Indexnocken 9 angeordnet sind, weist der Synchronring 20 drei weitere als Lücken ausgebildete Abschnitte 21 im Bereich der umlaufenden Sperrzähne 18 in der Mitte zwischen zwei Indexnocken 9 auf. An derselben Position in Umfangsrichtung weist der Grundkörper 8 jeweils eine Materialverdickung 22 auf, deren Erstreckung in Umfangsrichtung näherungsweise mit der Länge des eine Lücke bildenden Abschnitts 21 übereinstimmt.

In Radialrichtung weist die Materialverdickung 22, die näherungsweise quaderförmig bzw. als gebogenes Segment ausgebildet ist, jedoch einen geringeren Durchmesser als der durch die Zentrierflächen 10 definierte Zentrierdurchmesser auf. Dementsprechend sind die Materialverdickungen 22 anders als die Zentrierflächen 10 der Zentriernocken 16 nicht an einem Zentriervorgang beteiligt. Die Materialverdickungen 22 dienen lediglich dazu, die auf Grund der fehlenden Sperrzähne 18 in dem Abschnitt 21 verringerte Steifigkeit zu kompensieren. Somit weist der Synchronring 20 über seinen Umfang eine Steifigkeit auf, die mit derjenigen eines herkömmlichen, in Fig. 1 gezeigten Synchronrings 1 vergleichbar ist. Allerdings ergibt sich durch die eine Lücke bildenden Abschnitte 21 trotz der Materialverdickungen 22 eine verringerte Masse des Synchronrings 20. In den Fig. 4 und 5 erkennt man, dass insgesamt drei über den Umfang verteilte Materialverdickungen 22 vorhanden sind.

Fig. 6 ist ein Schnitt entlang der Linie VI-VI in Fig. 5. In Fig. 6 erkennt man, dass an einer Planfläche 25 (Axialfläche) des Synchronrings im Bereich des Zentriernockens 16 eine Abschrägung 23 ausgebildet ist, deren Winkel α in dem dargestellten Ausführungsbeispiel ca. 20° beträgt. Im Allgemeinen kann der Winkel α 1° bis 70° betragen. Dadurch ergibt sich eine weitere Reduzierung der Masse. Zusätzlich weist eine Innen- und/oder Außenkante der Planfläche 25 bzw. der Abschrägung 23 eine umlaufende Fase oder Verrundung 24 auf, die sich an der Seite des kleinen Konusdurchmessers des Synchronrings 20 befindet.

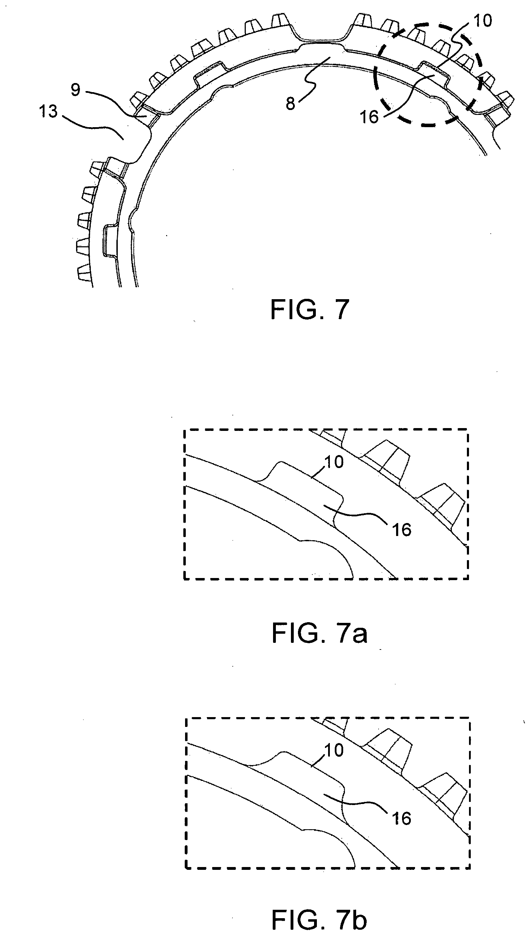

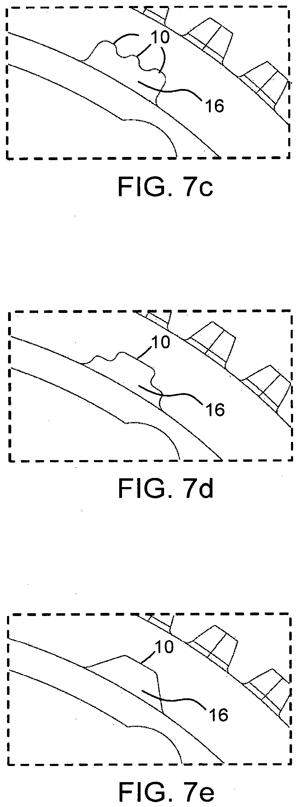

Die Fig. 7 fokussiert mit der kreisförmig gestrichelten Linie auf einen Zentriernocken 16 mit Zentrierfläche 10. Die Fign. 7a bis 7e zeigen in vergrößerten Darstellungen dieser Fokussierung Alternativen in der Ausgestaltung eines Zentriernockens 16 und/oder seiner Zentrierfläche 10.

Fig. 7a zeigt die blockförmige Ausgestaltung des Zentriernockens 16, wie sie in den Fign. 2 bis 5 dargestellt ist.

Statt der Ausgestaltung nach Fig. 7a können gemäß Fig. 7b die Flanken des Zentriernockens 16 zur Erhöhung seiner Stabilität und Belastbarkeit mit einem größeren Radius verrundet sein, welcher vorzugsweise bereits an der Zentrierfläche 10 ansetzt.

Fig. 7c zeigt eine Ausgestaltung des Zentriernockens 16 mit mehreren Zentrierflächen 10, welche durch Riefen oder Rillen im Zentriernocken 16 voneinander getrennt sind. Statt linearer Riefen oder Rillen können auch kreisförmige Einsenkungen in die Zentrierfläche 10 eingebracht sein, so dass sich eine zusammenhängende, jedoch löchrige Zentrierfläche ergibt. Durch das Vorsehen der Riefen, Rillen oder Einsenkungen kann die Masse des Synchronrings weiter verringert werden.

Fig. 7d zeigt eine Ausgestaltung des Zentriernockens 16 mit einem abgesetzten Sockel. Auch hier kann eine Verringerung der Masse des Synchronrings bei nahezu gleicher Stabilität des Zentriernockens 16 erzielt werden.

Fig. 7e zeigt eine Ausgestaltung des Zentriernockens 16 mit trapezförmigem Sockel. Wie bei der Ausgestaltung der Fig. 7b kann hier eine Erhöhung der Stabilität und Belastbarkeit des Zentriernockens 16 erreicht werden.

Die Vielzahl der Zentriernocken 16 des Synchronrings kann eine oder mehrere der in Fign. 7a bis 7e gezeigten Ausgestaltungen aufweisen.

Durch die verschiedenen erläuterten Maßnahmen kann die Masse eines Synchronrings beträchtlich verringert werden. Bei dem Ausführungsbeispiel gemäß Fig. 2 wird bereits eine Verringerung in der Größenordnung von 20% erreicht. Bei dem Ausführungsbeispiel gemäß den Fig. 4 und 5 wird eine Reduzierung der Masse um mehr als 25% erreicht. Dementsprechend kann ein beträchtlicher Teil des für die Herstellung benötigten Werkstoffs, bei dem es sich in diesem Ausführungsbeispiel um eine Messinglegierung handelt, eingespart werden. Darüber hinaus können die beschriebenen Modifikationen durch vergleichsweise einfache Änderungen der Schmiede- oder Umformwerkzeuge und der sonstigen benötigten Formen umgesetzt werden.

### Bezugszeichenliste

- 1: Synchronring
- 2: Grundkörper
- 3: Indexnocken
- 4: Zentrierfläche
- 5: Sperrzahn
- 6: Konusfläche
- 7: Synchronring
- 8: Grundkörper
- 9: Indexnocken
- 10: Zentrierfläche
- 11, 12: Anschlagfläche
- 13: Aussparung
- 14, 15: Bereich
- 16: Zentriernocken
- 17: Synchronring
- 18: Sperrzahn
- 19: Abschnitt
- 20: Synchronring
- 21: Abschnitt
- 22: Materialverdickung
- 23: Abschrägung
- 24: Fase / Verrundung / Radius
- 25: Planfläche

## Patentansprüche

1. Geschmiedeter Synchronring (7, 17, 20), mit einem Grundkörper (8), an dem sich radial nach außen erstreckende Indexnocken (9) und Zentrierflächen (10) ausgebildet sind,
wobei der Synchronring (7, 17, 20) an seinem Außenumfang sich radial erstreckende Sperrzähne (18) aufweist,
wobei wenigstens ein Indexnocken (9) an einer von einer in Umfangsrichtung weisenden Anschlagfläche (11, 12) beabstandeten Position eine Aussparung (13) aufweist,
**dadurch gekennzeichnet,**
**dass** die Aussparung (13) komplett durchstoßend ausgebildet ist, also die Aussparung (13) sowohl die Sperrzähne (18) tragende Schürze als auch den Indexnocken (9) ausnimmt.

2. Geschmiedeter Synchronring (7, 17, 20) nach Anspruch 1,
**dadurch gekennzeichnet,**
**dass** wenigstens eine Zentrierfläche (10) sich lediglich über einen festgelegten Abschnitt (19, 21) in Umfangsrichtung erstreckt und sich daran in Umfangsrichtung anschließende Bereiche (14, 15) einen geringeren Durchmesser als die Zentrierfläche (10) aufweisen.

3. Geschmiedeter Synchronring (7, 17, 20) nach Anspruch 2,
**dadurch gekennzeichnet,**
**dass** alle Indexnocken (9) an einer von einer in Umfangsrichtung weisenden Anschlagfläche (11, 12) beabstandeten Position eine Aussparung (13) aufweisen und/oder dass alle Zentrierflächen (10) sich lediglich über einen festgelegten Abschnitt (19, 21) in Umfangsrichtung erstrecken und sich daran in Umfangsrichtung anschließende Bereiche (14, 15) einen geringeren Durchmesser als die Zentrierfläche (10) aufweisen.

4. Geschmiedeter Synchronring (7, 17, 20) nach einem der vorangehenden Ansprüche,
**dadurch gekennzeichnet,**
**dass** die Aussparung (13) des Indexnockens (9) U-förmig, quaderförmig, als kreisförmige Tasche, als kugelförmige Tasche oder als rechteckige oder trapezförmige Tasche ausgebildet ist.

5. Geschmiedeter Synchronring (7, 17, 20) nach einem der vorangehenden Ansprüche,
**dadurch gekennzeichnet,**
**dass** die Aussparung (13) in der Mitte des Indexnockens (9) angeordnet ist.

6. Geschmiedeter Synchronring (7, 17, 20) nach einem der Ansprüche 2 bis 5,
**dadurch gekennzeichnet,**
**dass** sich eine Zentrierfläche (10) über einen Winkel von 1° bis 40°, vorzugsweise von 5° bis 20°, vorzugsweise 10° bis 15°, in Umfangsrichtung erstreckt.

7. Geschmiedeter Synchronring (7, 17, 20) nach einem der vorangehenden Ansprüche,
**dadurch gekennzeichnet,**
**dass** jedem Indexnocken (9) zwei Zentrierflächen (10) zugeordnet sind, die an beiden Seiten des Indexnockens (9) angeordnet sind.

8. Geschmiedeter Synchronring (7, 17, 20) nach einem der vorangehenden Ansprüche,
**dadurch gekennzeichnet,**
**dass** er drei, sechs oder neun Zentrierflächen (10) aufweist.

9. Geschmiedeter Synchronring (7, 17, 20) nach einem der vorangehenden Ansprüche,
**dadurch gekennzeichnet,**
**dass** eine Zentrierfläche (10) an einem Zentriernocken (16) ausgebildet ist.

10. Geschmiedeter Synchronring (7, 17, 20) nach einem der vorangehenden Ansprüche,
**dadurch gekennzeichnet,**
**dass** die an seinem Außenumfang sich radial erstreckenden Sperrzähne (18) äquidistant angeordnet sind, wobei wenigstens ein Abschnitt (19, 21) des Außenumfangs keine Sperrzähne (18) aufweist.

11. Geschmiedeter Synchronring (7, 17, 20) nach Anspruch 10,
**dadurch gekennzeichnet,**
**dass** er mehrere, vorzugsweise äquidistant über den Umfang verteilt angeordnete, keine Sperrzähne (18) aufweisende Abschnitte (19, 21) aufweist.

12. Geschmiedeter Synchronring (7, 17, 20) nach Anspruch 10 oder 11,
**dadurch gekennzeichnet,**
**dass** im Bereich (14, 15) eines keine Sperrzähne (18) aufweisenden Abschnitts (19, 21) des Außenumfangs eine sich radial nach außen erstreckende Materialverdickung (22) ausgebildet ist.

13. Geschmiedeter Synchronring (7, 17, 20) nach einem der Ansprüche 9 bis 12,
**dadurch gekennzeichnet,**
**dass** er eine an einer Planfläche (25) des Zentriernockens (16) ausgebildete Abschrägung (23) oder Abrundung oder einen Radius aufweist.

14. Geschmiedeter Synchronring (7, 17, 20) nach Anspruch 13,
**dadurch gekennzeichnet,**
**dass** die Abschrägung (23) einen Winkel zwischen 1° und 70° mit der Planfläche (25) bildet.

15. Geschmiedeter Synchronring (7, 17, 20) nach einem der Ansprüche 9 bis 14,
**dadurch gekennzeichnet,**
**dass** eine Außenkante der Planfläche (25) eine umlaufende Fase (24) oder eine Abrundung oder einen Radius aufweist.

## Claims

1. Forged synchronizer ring (7, 17, 20), with a main body (8), on which radially outwardly extending indexing lobes (9) and centring faces (10) are configured, the synchronizer ring (7, 17, 20) comprising radially extending locking teeth (18) on its outer circumference, at least one indexing lobe (9) having a cut-out (13) at a position which is spaced apart from a stop face (11, 12) which points in the circumferential direction, **characterized**
**in that** the cut-out (13) is of completely penetrating configuration, that is to say the cut-out (13) cuts out both the indexing lobe (9) and the skirt which supports the locking teeth (18).

2. Forged synchronizer ring (7, 17, 20) according to Claim 1,
**characterized**
**in that** at least one centring face (10) extends merely over a defined portion (19, 21) in the circumferential direction, and regions (14, 15) which adjoin it in the circumferential direction have a smaller diameter than the centring face (10).

3. Forged synchronizer ring (7, 17, 20) according to Claim 2,
**characterized**
**in that** all the indexing lobes (9) have a cut-out (13) at a position which is spaced apart from a stop face (11, 12) which points in the circumferential direction, and/or in that all the centring faces (10) extend merely over a defined portion (19, 21) in the circumferential direction, and regions (14, 15) which adjoin it in the circumferential direction have a smaller diameter than the centring face (10).

4. Forged synchronizer ring (7, 17, 20) according to one of the preceding claims,
**characterized**
**in that** the cut-out (13) of the indexing lobe (9) is configured in a U-shaped manner, in a cuboid manner, as a spherical pocket or as a rectangular or trapezoidal pocket.

5. Forged synchronizer ring (7, 17, 20) according to one of the preceding claims,
**characterized**
**in that** the cut-out (13) is arranged in the centre of the indexing lobe (9).

6. Forged synchronizer ring (7, 17, 20) according to one of Claims 2 to 5,
**characterized**
**in that** a centring face (10) extends in the circumferential direction over an angle of from 1° to 40°, preferably of from 5° to 20°, preferably of from 10° to 15°.

7. Forged synchronizer ring (7, 17, 20) according to one of the preceding claims,
**characterized**
**in that** each indexing lobe (9) is assigned two centring faces (10) which are arranged on the two sides of the indexing lobe (9).

8. Forged synchronizer ring (7, 17, 20) according to one of the preceding claims,
**characterized**
**in that** it comprises three, six or nine centring faces (10) .

9. Forged synchronizer ring (7, 17, 20) according to one of the preceding claims,
**characterized**
**in that** a centring face (10) is configured on a centring lobe (16).

10. Forged synchronizer ring (7, 17, 20) according to one of the preceding claims,
**characterized**
**in that** the locking teeth (18) which extend radially on its outer circumference are arranged equidistantly, at least one portion (19, 21) of the outer circumference not comprising any locking teeth (18).

11. Forged synchronizer ring (7, 17, 20) according to Claim 10,
**characterized**
**in that** it comprises a plurality of portions (19, 21) which are preferably arranged distributed equidistantly over the circumference and do not comprise any locking teeth (18).

12. Forged synchronizer ring (7, 17, 20) according to Claim 10 or 11,
**characterized**
**in that** a radially outwardly extending thickened material portion (22) is configured in the region (14, 15) of a portion (19, 21) of the outer circumference which does not comprise any locking teeth (18).

13. Forged synchronizer ring (7, 17, 20) according to one of Claims 9 to 12,
**characterized**
**in that** it has a radius or a rounded portion or a bevel (23) which is configured on a planar face (25) of the centring lobe (16).

14. Forged synchronizer ring (7, 17, 20) according to Claim 13,
**characterized**
**in that** the bevel (23) forms an angle of between 1° and 70° with the planar face (25).

15. Forged synchronizer ring (7, 17, 20) according to one of Claims 9 to 14,
**characterized**
**in that** an outer edge of the planar face (25) comprises a peripheral chamfer (24) or a rounded portion or a radius.

## Revendications

1. Bague de synchronisation forgée (7, 17, 20), comportant un corps de base (8) sur lequel sont réalisées des cames d'indexage (9) s'étendant radialement vers l'extérieur et des surfaces de centrage (10),
la bague de synchronisation (7, 17, 20) comprenant au niveau de sa périphérie extérieure des dents de blocage (18) s'étendant radialement,
au moins une came d'indexage (9) comprenant un évidement (13) à une position espacée d'une surface de butée (11, 12) orientée dans la direction périphérique, **caractérisée en ce que**
l'évidement (13) est réalisé de manière complètement traversante, c'est-à-dire que l'évidement (13) reçoit à la fois la jupe portant des dents de blocage (18) et la came d'indexage (9).

2. Bague de synchronisation forgée (7, 17, 20) selon la revendication 1,
**caractérisée en ce**
**qu'**au moins une surface de centrage (10) s'étend seulement sur une partie définie (19, 21) dans la direction périphérique et des régions (14, 15) s'y raccordant dans la direction périphérique présentent un plus petit diamètre que la surface de centrage (10).

3. Bague de synchronisation forgée (7, 17, 20) selon la revendication 2,
**caractérisée en ce que**
toutes les cames d'indexage (9) comprennent un évidement (13) à une position espacée d'une surface de butée (11, 12) orientée dans la direction périphérique et/ou **en ce que** toutes les surfaces de centrage (10) s'étendent seulement sur une partie définie (19, 21 dans la direction périphérique et des régions (14, 15) s'y raccordant dans la direction périphérique présentent un plus petit diamètre que la surface de centrage (10).

4. Bague de synchronisation forgée (7, 17, 20) selon l'une des revendications précédentes,
**caractérisée en ce que**
l'évidement (13) de la came d'indexage (9) est réalisé en forme de U, de manière parallélépipédique, sous forme de cavité circulaire, sous forme de cavité sphérique ou sous forme de cavité rectangulaire ou trapézoïdale.

5. Bague de synchronisation forgée (7, 17, 20) selon l'une des revendications précédentes,
**caractérisée en ce que**
l'évidement (13) est disposé au centre de la came d'indexage (9).

6. Bague de synchronisation forgée (7, 17, 20) selon l'une des revendications 2 à 5,
**caractérisée en ce**
**qu'**une surface de centrage (10) s'étend sur un angle de 1° à 40°, de préférence de 5° à 20°, de préférence de 10° à 15°, dans la direction périphérique.

7. Bague de synchronisation forgée (7, 17, 20) selon l'une des revendications précédentes,
**caractérisée en ce que**
deux surfaces de centrage (10) sont associées à chaque came d'indexage (9), lesquelles surfaces de centrage sont disposées des deux côtés de la came d'indexage (9).

8. Bague de synchronisation forgée (7, 17, 20) selon l'une des revendications précédentes,
**caractérisée en ce**
**qu'**elle comprend trois, six ou neuf surfaces de centrage (10).

9. Bague de synchronisation forgée (7, 17, 20) selon l'une des revendications précédentes,
**caractérisée en ce**
**qu'**une surface de centrage (10) est réalisée sur une came de centrage (16).

10. Bague de synchronisation forgée (7, 17, 20) selon l'une des revendications précédentes,
**caractérisée en ce que**
les dents de blocage (18) s'étendant radialement au niveau de sa périphérie extérieure sont disposées de manière équidistante, au moins une partie (19, 21) de la périphérie extérieure ne comprenant aucune dent de blocage (18).

11. Bague de synchronisation forgée (7, 17, 20) selon la revendication 10,
**caractérisée en ce**
**qu'**elle comprend plusieurs parties (19, 21) disposées de façon répartie de manière équidistante sur la périphérie et ne comprenant aucune dent de blocage (18).

12. Bague de synchronisation forgée (7, 17, 20) selon la revendication 10 ou 11,
**caractérisée en ce**
**qu'**un renflement de matière (22) s'étendant radialement vers l'extérieur est réalisé dans la région (14, 15) d'une partie (19, 21) de la périphérie extérieure, laquelle partie ne comprend aucune dent de blocage (18).

13. Bague de synchronisation forgée (7, 17, 20) selon l'une des revendications 9 à 12,
**caractérisée en ce**
**qu'**elle comprend un biseau (23) ou un arrondi ou un rayon réalisé au niveau d'une surface plane (25) de la came de centrage (16).

14. Bague de synchronisation forgée (7, 17, 20) selon la revendication 13,
**caractérisée en ce que**
le biseau (23) forme avec la surface plane (25) un angle compris entre 1° et 70°.

15. Bague de synchronisation forgée (7, 17, 20) selon l'une des revendications 9 à 14,
**caractérisée en ce**
**qu'**une arête extérieure de la surface plane (25) comprend un chanfrein périphérique (24) ou un arrondi ou un rayon.
